# EUROPÄISCHE PATENTSCHRIFT

(11) **EP 1 207 477 B1**
(45) Veröffentlichungstag und Bekanntmachung des Hinweises auf die Patenterteilung: **22.06.2005**
(21) Anmeldenummer: 01125500.7
(22) Anmeldetag: 07.11.2001
(51) Int. Cl.: G06F 17/60, G06F 9/46

(54) **Verfahren zum Bereitstellen von Zweckinformationen eines Dienstanbieters an Dienstnutzer**
Method for providing destination information from a service provider to a user
Méthode pour la fourniture d'information de destination à un utilisateur par un prestataire de service

(30) Priorität: 13.11.2000 DE 10056208
(43) Veröffentlichungstag der Anmeldung: 22.05.2002
(73) Patentinhaber: Deutsches Zentrum für Luft- und Raumfahrt e.V., 51147 Köln (DE)
(72) Erfinder: Angermann, Michael, Dipl.-Ing., 82166 Gräfelfing (DE); Steingass, Alexander, Dipl.-Ing., 82205 Gilching (DE); Robertson, Patrick, Dr., 82541 Ammerland (DE)
(74) Vertreter: von Kirschbaum, Albrecht, Dipl.-Ing.

(56) Entgegenhaltungen:
- EP-A- 0 965 917
- WO-A-00/65497
- US-A- 6 125 447
- "Jini (TM) Architectural Overview" SUN MICROSYSTEMS, Januar 1999 (1999-01), XP002152110
- CRICHTON C ET AL: "When to trust mobile objects: access control in the Jini Software System" TECHNOLOGY OF OBJECT ORIENTED LANGUAGES & SYSTEMS PROCEEDINGS OF THE INTERNATIONAL CONFERENCE, PARIS, FR, 1. August 1999 (1999-08-01), Seiten 116-125, XP002155686

## Beschreibung

Die Erfindung betrifft ein Verfahren zur Bereitstellung von Zweckinformationen, z.B. von Reise-, Buchungs- oder Zahlungsinformationen sowie von deren jeweiligen Vorgängen, eines Diensteanbieters an Dienstenutzer unter Verwendung einer elektronischen Datenverarbeitung (EDV), wobei der Diensteanbieter, welcher als eine Software auf einem EDV-Gerät mit Kommunikationsfähigkeit ausgeprägt ist, mittels Helferdiensten einem Dienstenutzer, welcher ebenfalls als eine Software auf einem EDV-Gerät mit Kommunikationsfähigkeit ausgeprägt ist, Algorithmen und/oder Algorithmenaufrufe und/oder Informationen als Dienst-Objekt zur Verfügung stellt, das beim Dienstenutzer ein Abrufen von Bedarfsinformationen bewirkt, welche auf einem dem betreffenden Dienstenutzer zugeordneten EDV-Gerät im Rahmen eines so genannten, sowohl Nutzerdaten als auch Historiendaten und Wünsche (Optionen) des Nutzers enthaltenden Status-Objekts gespeichert sind und den weiteren Ablauf der Algorithmen und/oder Algorithmenaufrufe steuern, die beim Dienstenutzer einen Zugewinn an Zweckinformation und/oder das Auslösen eines oder mehrerer zur Bereitstellung von Zweckinformationen, also z.B. von Reise-, Buchungs- oder Zahlungsinformationen und von deren jeweiligen Vorgängen, notwendiger Prozesse veranlassen.

Ein ein solches Verfahren einsetzendes System zum Versorgen eines Reisenden mit Reiseinformationen ist aus WO 00/65497 A bekannt.

Bei der Bereitstellung von Reiseinformationsdienstleistungen, Bezahlungsdienstleistungen und ähnlichen Dienstleistungen per EDV-Anlage tritt das Problem auf, daß Dienstenutzer, z.B. eine Software auf einem Notebook-Rechner eines Reisenden, und Diensteanbieter, z.B. die Software auf einem Rechnerserver einer Fluggesellschaft, sich über die genaue Art der Dienstleistung einig sein müssen. So muß beispielsweise der Dienstenutzer, im Beispiel also der Notebook-Rechner des Reisekunden, genau wissen, in welchem Format er die Anfrage "Gibt es von MUC nach CDG am 18.5.2001 ab 19.15 Uhr die Möglichkeit eines Fluges, der nicht nach 21.25 Uhr ankommt?" an den Diensteanbieter, im Beispiel also den Rechnerserver der Fluggesellschaft, richten muß.

Bisher wird dies durch Definition einer API-Schnittstelle (Application Programming Interface) bewerkstelligt, welche Parameter und Nutzungsregeln einer Anzahl von Diensteaufrufen spezifiziert und dokumentiert. Dies bedarf eines außerordentlichen Standardisierungsaufwandes und führt zu einer langen Liste von Diensten, die jeweils bei Diensteanbietern implementiert sein müssen. Für diesen Sachverhalt besteht der Fachterminus: "Die API-Schnittstelle muß implementiert sein". Die Dienstenutzer müssen, um möglichst in den vollen Genuß aller zur Verfügung stehenden Dienste zu kommen, ebenfalls ein breites Spektrum an API-Aufrufen benutzen können.

Sowohl die Programmierer von Software-Diensten als auch die Programmierer von dienstenutzenden Software-Modulen müssen das API kennen. Neue Dienste wären aus technischen Gründen nur schlecht einführbar, weil sie diesem Standardisierungsverfahren unterworfen wären. Ferner wären diese Liste der Diensteaufrufe sowie die dazugehörigen Parameter und Nutzungsregeln (API) sehr lang und umfangreich und würden die Speicherkapazität von EDV-Geräten stark belasten. Auch die oft zu wiederholende Aktualisierung brächte eine Reihe von technischen Problemen nach sich, z.B. im Hinblick auf die Datenübertragungsmenge und die Versionskontrolle.

Zur Lösung dieses Problems kann ein flexibleres Verfahren zur Bereitstellung von Diensten eines Diensteanbieters vorgesehen werden, wodurch die Fähigkeiten des Anbietens ausgebaut werden, ohne daß die Dienstenutzer die neuen Fähigkeiten im voraus kennen müssen und ohne daß eine die Programmierung betreffende Abstimmung zwischen Diensteanbieter und Dienstenutzern und damit ein hoher Standardisierungsaufwand erforderlich werden. Bei diesem flexibleren Verfahren, das bereits eingangs angesprochen ist, wird ein allgemeiner Dienst, nämlich ein sogenannter Helferdienst definiert, welcher vom Diensteanbieter angeboten wird und in der Lage ist, beim Dienstenutzer etwas Nützliches zu verrichten, ohne daß der Dienstenutzer von der Fähigkeit und den Formalien im Sinne des klassischen API etwas wissen muß. Ein solches Verfahren mit Helferdiensten bietet den Vorteil, daß durch die Verwendung der Helferdienste die Fähigkeit der Diensteanbieter in der Zukunft ausbaubar ist, obwohl die Nutzer der Diensteanbieter nicht unbedingt diese Fähigkeiten im voraus kennen müssen. Die Helferdienste beschreiben einen Dienst auf einem höheren Abstraktionsniveau, als es klassische API-Aufrufe tun. Wenn der Dienstenutzer einen Dienst ausgesucht hat, dann kann er alle Informationen, Algorithmen und Algorithmenaufrufe, die zur Nutzung der Dienste des Dienstes notwendig sind, vom Diensteanbieter anfordern oder von einem Look-Up-Dienst erhalten.

Diese Algorithmen und zugehörigen Daten sind in der Lage, Informationen, die auf dem EDV-Gerät des Dienstenutzers gespeichert oder dort verfügbar sind, zu erkennen und/oder zu bearbeiten und/oder zu benutzen. Dies setzt eine gewisse Standardisierung dieser Informationen voraus. Diese Informationen können physikalisch im Speicher des EDV-Geräts des Dienstenutzers stehen. Die vom Diensteanbieter angebotenen Dienste sind auf einem hohen Abstraktionsniveau definiert und werden hier als Helferdienste bezeichnet.

Beispielhafte Namen solcher hochabstrahierter Helferdienste können z.B. sein: "Zeige den Weg an das Ziel, welches im EDV-Gerät des Dienstenutzers gespeichert ist" oder "Ergänze den Status des Dienstenutzers" oder einfach "Helfe". Eine diesbezügliche Erläuterung folgt im Anschluß hiervon noch anhand eines Beispiels. Diese Helferdienste werden von Anfang an namentlich definiert, nicht jedoch ihre genaue Realisierung und Verwendung und nicht zwingend ihr Zweck.

Es folgt nun das vorher bereits angekündigte Beispiel und zwar für einen Helferdienst "Helfe":

Als Helferdienst soll hierbei also der Dienst "Helfe" dienen. Ein diesem Helferdienst zugeordneter Algorithmus sucht nun beim Dienstenutzer, in diesem Beispiel einem mobilen Gerät, welches als ein Mobiltelephon oder PDA (Personal Digital Assistant) realisiert ist, nach einem dort gespeicherten Status-Objekt, welches den Status des Nutzers repräsentiert. Dies können z.B. die aktuelle Position, eine topologische Repräsentation des geplanten Ziels sowie des Weges dorthin und die dafür vorgesehenen Verkehrsmittel sein.

Das Status-Objekt repräsentiert in diesem Beispiel, daß der menschliche Nutzer von A nach C reisen möchte, und zwar per Bus von A nach B, und zu Fuß von B nach C, und ferner, wo sich der Nutzer gerade befindet, oder aber, daß dieser Ort unbekannt ist. Die Form des Status-Objekts ist dem Diensteanbieter bekannt und kann aus einem in der objektorientierten Programmierung bekannten Art und Weise geschehen, z.B. als vererbtes Objekt, dessen Datenfeldnamen, Schnittstellen und Methoden bekannt sind.

Der Algorithmus ist in der Lage, das Status-Objekt zu durchsuchen und die Einträge mit bestimmten, dem Algorithmus bekannten Feldern zu vergleichen. Dies kann z.B. durch lineares Durchsuchen der Status-Objekt-Inhalte oder durch Aufruf einer Methode des Status-Objekts geschehen, wobei die Parameter gleich den gesuchten Begriffen gesetzt sind. Hierbei ist die Methode des Status-Objekts als klassische Datenbankabfrage ausgeführt, wobei das Status-Objekt die Datenbank bildet und in der Datenbank (Status-Objekt) nach den ihr übermittelten Parametern (Suchbegriffe) gesucht wird.

Der Algorithmus, welcher vom Diensteanbieter übermittelt wurde, ist, wie vorstehend beispielhaft skizziert wurde, in der Lage, dieses Objekt mit seinen Inhalten und Eigenschaften zu erkennen. Insbesondere erkennt er die dem Diensteanbieter bekannten Ziele A, B und C in diesem Objekt und kommuniziert per Funk und/oder leitungsgebunden nun mit dem Diensteanbieter, um von ihm zu erfahren, daß es einen Bus direkt von A nach C gibt. Dies wird in dem Status-Objekt zusammen mit den Fahrzeiten des Busses auf dem Mobiltelephon bzw. PDA vermerkt. Die entsprechenden Anweisungen werden dem Nutzer mitgeteilt.

Der verändernde Eingriff auf das Status-Objekt kann z.B. mittels Methodenaufruf des Status-Objekts geschehen, wobei die Parameter des Methodenaufrufs die Zieladresse und neue Inhalte des Status-Objekts beinhalten. Der verändernde Eingriff auf das Status-Objekt könnte auch durch direkten Schreibzugriff auf den Speicher, welcher das Status-Objekt hält, geschehen.

Bei den Dienstebereitstellungsverfahren, welche derartige Helferdienste benutzen, existieren allerdings keine Mechanismen, mit deren Hilfe böswillige Diensteanbieter in Schach gehalten werden können. Es könnte beispielsweise ein mutwilliger Diensteanbieter einen kostenlosen "Koffertragedienst" anbieten, beim EDV-Gerät einer dienstenutzenden Person, z.B. einem Reisenden, im Status-Objekt den Wohnort sowie die Wohnadresse dieses Reisenden nachlesen und diese zusammen mit der geplanten Reisedauer an den Diensteanbieter, wie vorher beschrieben, im Wege über eine Kommunikation mitteilen. Diese gewonnenen Informationen könnten eine Einbruchsplanung im Hause der dienstenutzenden Person erleichtern.

Aus EP-A-0 965 917 ist ein Verfahren zur Zugangskontrolle zu Diensten in einem geschützten Speichersystem bekannt. Durch diesen bekannten Speicherschutz mit Genehmigung wird die Sicherheit eines verteilten Systems verbessert.

Auch aus US-A-6 125 447 ist ein Verfahren bekannt, mit welchem in einem Rechnersystem die Zugriffssicherheit dadurch verbessert wird, daß Schutzbereiche geschaffen werden, die einem besonderen Genehmigungsverfahren unterliegen.

In dem Artikel von C. Crichton et al.: "When to trust mobile objects: access control in the Jini™ Software System", Technology of Object Oriented Languages & Systems Proceedings of the International Conference, Paris, FR, 1. August 1999, Seiten 116-125, XP002155686 wird darüber hinaus im Zusammenhang mit Zugangskontrollen in Jini™-Software-Systemen das Problem diskutiert, daß potentiell gefährliche Objekte nicht kommunizieren dürfen.

Die Jini™-Architektur selbst ist im einzelnen in einer Überblicksdarstellung "Jini™-Architectural Overview" von Sun Microsystems, Januar 1999, XP002152110 ausführlich beschrieben.

Der Erfindung liegt die Aufgabe zu Grunde, als Sicherheitsvorkehrung bei einem Verfahren zur Bereitstellung von Zweckinformationen, z.B. von Reise-, Buchungs- oder Zahlungsinformationen sowie von deren jeweiligen Vorgängen, eines Diensteanbieters an Dienstenutzer unter Verwendung einer elektronischen Datenverarbeitung (EDV) den lesenden und schreibenden Zugriff auf das Status-Objekt des jeweiligen Dienstenutzers zu regeln, so daß die Zuteilung der Rechte auf den lesenden Zugriff auf Informationen beim Dienstenutzer und/oder der Schreibzugriff im Speicher des EDV-Geräts des Dienstenutzers von letzterem nach dessen Sicherheitseinschätzung beschränkt werden kann.

Gemäß der Erfindung, die sich auf ein Verfahren der eingangs genannten Art bezieht, wird diese Aufgabe dadurch gelöst, daß ein Bereich im Speicher des EDV-Geräts des Dienstenutzers dahingehend markiert wird, daß die das Dienst-Objekt darstellenden Algorithmen und/oder Algorithmenaufrufe und/oder Informationen des Diensteanbieters, die physikalisch im Speicher des EDV-Geräts des Dienstenutzers stehen können, dort lesenden Zugriff haben, daß die Auswahl des zu markierenden Speicherbereiches von einem Überwachungsalgorithmus festgesetzt wird, der per Funktionsaufruf erkennen kann, welche Art der Dienstleistung der Diensteanbieter anbieten möchte, und dann entscheidet, welcher Speicherbereich markiert werden soll, so daß bei jedem Lesezugriff des Diensteanbieters geprüft wird, ob der betreffende Lesezugriff berechtigt ist oder nicht, daß der schreibende Zugriff analog zum lesenden Zugriff gesetzt und geprüft wird, wobei die Bereiche des lesenden und schreibenden Zugriffs sich nicht überlappen müssen, sondern völlig unterschiedlich sein können, daß das Dienst-Objekt die Option hat, den lesenden und/oder schreibenden Zugriff zu erweitern, falls im Gegenzug auf eine Kommunikation mit der Außenwelt verzichtet wird, daß dazu das Dienst-Objekt beim Überwachungsalgorithmus die Beschneidung seiner Kommunikationsrechte beantragt, wodurch ein erweiterter Lesebereich und/oder ein modifizierter Schreibbereich erreicht wird, und daß das Betriebssystem oder eine sonstige, die Rechte verwaltende Software-Einheit die Kommunikationsrechte des Dienst-Objekts verweigert und die modifizierten Lese- und/oder Schreibe-Rechte kontrolliert, so daß das Dienst-Objekt nun innerhalb seiner neuen Rechte in der Lage ist, das Status-Objekt lesend und/oder schreibend zu bearbeiten. Die Option kann dadurch eintreten, daß das Dienst-Objekt erkennt, daß noch weitere Aktionen im Status-Objekt von Nöten wären, aber der Zugriff auf Grund der fehlenden Leserechte verweigert wird. Die Erkennung kann auf Grund der logischen Prüfung einer Reihe von Kriterien erfolgen.

Gegenstand der Erfindung ist somit ein Verfahren zur Sicherheitsüberwachung von Systemen, bei dem zum einen die Instanz "Dienst-Objekt" und zum anderen eine Instanz "Sicherheitsobjekt", d.h. der Überwachungsalgorithmus beim Dienstenutzer, verwendet werden, wobei das Dienst-Objekt mit einer Außenstelle in Verbindung stehen kann. Das Verfahren nach der Erfindung zeichnet sich dadurch aus, daß die Schreib-/Leserechte des Dienst-Objekts situationsabhängig an die Kommunikationsfähigkeit des Dienst-Objekts gekoppelt werden können.

Das Verfahren nach der Erfindung kann in vorteilhafter Weise auf einem mobilen Reiseplanungssystem implementiert werden.

Durch den beim Verfahren nach der Erfindung erlangten flexiblen, situationsangepaßten Schreib-/Lesezugriff kann in vorteilhafter Weise trotz hoher Flexibilität die Sicherheit einer Diensteabwicklung, z.B. bei einem Reiseplanungssystem, maximiert werden.

Der Überwachungsalgorithmus kann auf der Basis einer Voreinstellung entscheiden, welcher Speicherbereich des EDV-Geräts des Dienstenutzers markiert werden soll. Der Überwachungsalgorithmus kann aber auch auf Grund einer Kommunikation mit der dienstenutzenden Person entscheiden, welcher Speicherbereich des EDV-Geräts des Dienstenutzers markiert werden soll.

Die Markierung kann zweckmäßig durch Setzen von Adressenflags, durch Einträge in eine Adressentabelle oder durch Einträge in Member-Datenfelder des sogenannten Status-Objekts vorgenommen werden.

In vorteilhafter Weise nimmt der Diensteanbieter an einem Look-Up-Verfahren teil und trägt dort ihm zugeordnete Helferdienste ein.

Es ist zweckmäßig, wenn die Algorithmen und/oder Algorithmenaufrufe und/oder Informationen die Steuerung des Diensteanbieters übernehmen, vorzugsweise durch Kommunikation mit dem Diensteanbieter.

Die Informationen des Diensteanbieters werden in zweckmäßiger Weise den Dienstenutzern über Baken angeboten, mit welchen ein Dienstenutzer mit Hilfe eines mobilen Geräts drahtlos mittels Funk-, Infrarot- oder Ultraschallsignalen oder drahtgebunden kommunizieren kann.

Die Helferdienste, die von der Bake angeboten werden, können als solche Dienste beschrieben, ausgeführt und bezeichnet werden, die einen Weg zu einem Ziel und/oder Zwischenziel beschreiben.

Die angebotenen Helferdienste lassen sich auch als Dienste beschreiben, ausführen und bezeichnen, welche Status-Informationen beim Dienstenutzer verändern und aktualisieren.

Die von den Algorithmen veränderbaren Informationen können die von einer reisenden Person zu nehmende/n Wegroute/n, Karten, Ankunftszeiten von Fahrzeugen (Taxi, Bus, Bahn usw.), in denen sich ein mobiles Gerät befindet, die aktuelle Position der Bake oder des mobilen Geräts, Fahrpläne und Routen von Verkehrsmitteln oder Hinweise zu Veranstaltungen, Restaurants und Hotels in der Umgebung, zu Touristeninformationen, Fremdenverkehrsämtern, Tankstellen, Geschäften, Ämtern, Krankenhäusern und dergleichen sein.

Eine vorteilhafte Weiterbildung des Verfahrens nach der Erfindung besteht darin, daß das vorgesehene Look-Up-Verfahren mittels eines Betriebssystem mit standardisierter Architektur, insbesondere entsprechend der JINI™-Technologie, arbeitet, die es ermöglicht, einen Anbieter von Diensten mit Teilnehmern über ein gemeinsames Netzwerk zu koppeln.

Die Verteilung der Algorithmen und/oder Algorithmenaufrufe und/oder Informationen auf verschiedene Recheneinheiten, d.h. beispielsweise das EDV-Gerät des Diensteanbieters oder das EDV-Gerät des Dienstenutzers, kann mittels RMI (Remote Method Invocation), z.B. von JAVA™, oder beispielsweise mittels JI-NI™ vorgenommen werden.

Zentraler Bestandteil beim Dienste-Bereitstellungsverfahren mit Sicherheitsvorkehrung nach der Erfindung ist das sogenannte Status-Objekt, das sowohl die Nutzerdaten als auch die Historiendaten und Wünsche (Optionen) des Nutzers enthält. Es wird ein Mechanismus, d.h. ein Verfahren benutzt, um zukünftige, also im Augenblick noch unbekannte Dienste in einen allgemeinen Rahmen unterzubringen, ohne beim Hinzukommen neuer Dienste das API ändern zu müssen. Hierzu wird also ein allgemeiner Dienst definiert, der als Helferdienst bezeichnet wird, vom Diensteanbieter angeboten wird und in der Lage ist, beim Dienstenutzer etwas Nützliches zu verrichten, ohne daß der Dienstenutzer von den Fähigkeiten und Formalien im Sinne des klassischen API etwas wissen muß. Ein solches Verfahren wird nachfolgend im einzelnen beschrieben:
- Der Diensteanbieter kann seinen Dienst oder seine Dienste über ein Look-Up-Verfahren bei einen Look-Up-Dienst eintragen, zusammen mit allen Informationen und Algorithmen, die zur Nutzung der Dienste des Dienstes notwendig sind.
- Dieser Look-Up-Dienst ist wiederum ein Algorithmus, der frei wählbar auf dem EDV-Gerät des Dienstenutzers oder des Diensteanbieters oder auf einer weiteren EDV-Anlage ausgeführt werden kann.
- Alternativ zu diesem Look-Up-Verfahren kann der Dienstenutzer auch direkt das Diensteangebot des Diensteanbieters in Erfahrung bringen, z.B. durch direkte Anfrage beim Diensteanbieter nach einer angebotenen Diensteliste, oder per Definition annehmen, daß ein Diensteanbieter einen ganz bestimmten Dienst anbietet. Wenn der Dienstenutzer auf diesem Wege einen Dienst ausgesucht hat, kann er alle Informationen und Algorithmen, die zur Nutzung der Dienste des Dienstes notwendig sind, vom Diensteanbieter anfordern.
- Diese Informationen und Algorithmen, die zur Nutzung der Dienste des Diensteanbieters notwendig sind, können Algorithmen und zugehörige Daten sein, welche auf dem EDV-Gerät des Dienstenutzers als Algorithmus ablaufen und von dort die notwendigen Kommunikationsanfragen an den Diensteanbieter steuern. Diese Algorithmen und zugehörigen Daten sind diensteanbieterspezifisch, denn sie implizieren Fähigkeiten der Diensteanbieter, die jedoch dem Dienstenutzer nicht, weder teilweise noch vollständig, bekannt sein müssen.
- Diese Algorithmen und zugehörigen Daten sind in der Lage, Informationen, die auf dem EDV-Gerät des Dienstenutzers gespeichert oder dort verfügbar sind, oder Dienste, die dem Dienstenutzer zur Verfügung stehen, z.B. Kommunikationsdienste, zu erkennen und/oder zu bearbeiten und/oder zu benutzen. Dies setzt eine gewisse Standardisierung dieser Informationen voraus. Diese Informationen können physikalisch im Speicher des EDV-Geräts des Dienstenutzers oder in einer mit dieser verbundenen weiteren EDV-Einheit stehen.
- Prinzipiell müssen diese Algorithmen physikalisch nicht ausschließlich auf dem EDV-Gerät des Dienstenutzers ablaufen, sondern können auf dem EDV-Gerät des Dienstenutzers und/oder mit ihm verbundenen weiteren Recheneinheiten und EDV-Geräten des Diensteanbieters verteilt ablaufen. Die Verwaltung dieser Aufteilung kann mittels RMI (Remote Method Invocation) beispielsweise von JAVA™ oder z.B. mittels JINI™ durchgeführt und überwacht werden.
- Die vom Diensteanbieter angebotenen Dienste sind auf einem hohen Abstraktionsniveau definiert und werden hier als Helferdienste bezeichnet. Beispielhafte Namen solcher hochabstrahierter Helferdienste können sein: "Zeige den Weg an das Ziel, welches im EDV-Gerät des Dienstenutzers gespeichert ist" oder "Ergänze den Status des Dienstenutzers" oder einfach "Helfe". Diese Helferdienste werden von Anfang an namentlich definiert, nicht jedoch ihre genaue Realisierung und Verwendung, und nicht zwingend ihr Zweck.
- Die Dienstenutzer, welche die Dienste nutzen wollen, müssen nur in der Lage sein, die entsprechenden Look-Up-Dienste zu finden, um die dort eingetragenen Dienste in Anspruch zu nehmen, d.h. die dort eingetragenen Helferdienste interpretieren zu können.
- Beim Verfahren nach der Erfindung wird ein Mechanismus benutzt, um den Zugriff des vom Diensteanbieter übermittelten Algorithmus zu begrenzen und auch situationsangepaßt zu verändern. Hierzu wird ein Bereich im Speicher des EDV-Geräts des Dienstenutzers dahingehend markiert, daß der Algorithmus des Dienstenutzers dort lesenden Zugriff hat. Die Auswahl des zu markierenden Speicherbereichs wird von einem Überwachungsalgorithmus ausgewählt. Der Überwachungsalgorithmus kann beim Algorithmus des Dienstenutzers per Funktionsaufruf erkennen, welche Art der Dienstleistung der Diensteanbieter anbieten möchte, und dann entscheiden, z.B. auf der Basis einer Voreinstellung oder auf Grund einer Kommunikation mit dem menschlichen Nutzer, welcher Bereich markiert werden soll. Die Markierung kann durch Setzen von Adressenflags oder durch Einträge in eine Adressentabelle oder durch Einträge in Memberdatenfelder des Status-Objekts erfolgen. Der Überwachungsalgorithmus hat dadurch den lesenden Bereich festgesetzt, und das Betriebssystem oder eine weitere Softwareeinheit ist in der Lage, bei jedem Lesezugriff des Algorithmus des Dienstenutzers zu prüfen, ob der betreffende Lesezugriff berechtigt ist.
- Der schreibende Zugriff kann analog zum lesenden Zugriff gesetzt und geprüft werden. Die Bereiche müssen sich nicht überlappen, sondern können sogar völlig unterschiedlich sein.
- Der Algorithmus des Dienstenutzers hat jedoch noch die Option, den lesenden und/oder schreibenden Zugriff zu erweitern, falls er im Gegenzug auf eine Kommunikation mit der Außenwelt verzichtet. Diese Option kann dadurch eintreten, daß der Algorithmus des Dienstenutzers erkennt, daß noch weitere Aktionen im Status-Objekt von Nöten wären, aber der Zugriff aufgrund der fehlenden Leserechte verweigert wird. Diese Erkennung kann auf Grund der logischen Prüfung einer Reihe von Kriterien geschehen. Per Funktionsaufruf beim Überwachungsalgorithmus kann der Algorithmus des Dienstenutzers nun die Beschneidung seiner Kommunikationsrechte beantragen und erhält dann einen erweiterten Lesebereich und/oder einen modifizierten Schreibebereich. Das Betriebssystem oder die sonst die Rechte verwaltende Softwareeinheit hat nun die Aufgabe, die Kommunikationsrechte des Algorithmus des Dienstenutzers zu verweigern und die modifizierten Lese- und/oder Schreibe-Rechte zu kontrollieren. Der Algorithmus des Dienstenutzers ist nun innerhalb seiner neuen Rechte in der Lage, das Status-Objekt lesend und/oder schreibend zu bearbeiten.

Es folgen nun zwei Anwendungsbeispiele für das Verfahren nach der Erfindung.

Das erste dieser Beispiele ist eine Anwendung mit dem Helferdienst "Helfe", dessen Prinzip in der Beschreibung bereits vorher erläutert worden ist.

An den Dienstenutzer, z.B. ein Mobiltelephon oder einen PDA (Personal Digital Assistant) wird ein Modifikationsobjekt übertragen, das den Fahrplan des Hauptbahnhofs München beinhaltet. Das Objekt ist in der Lage, das Status-Objekt des Dienstenutzers so zu modifizieren, daß eventuell verschobene Abfahrtszeiten auf die Reiseplanung abgebildet werden. Der Ablauf gestaltet sich dann folgendermaßen:

Das Dienst-Objekt liest den öffentlichen Teil des Status-Objekts des Dienstenutzers und darf die Zieldaten an den Dienstrechner der Deutschen Bahn übertragen. Das Dienst-Objekt ist aber nicht dazu berechtigt, den Startort oder die Rückreise zu lesen (Gefahr des Ausspionierens). Das Dienst-Objekt bekommt nun die Verbindungstabelle in "Richtung Zielort" übertragen und beantragt den erweiterten Lese-/Schreibzugriff. In diesem Moment kann es alle Daten lesen und ist nun beispielsweise in der Lage, den Kunden darauf hinzuweisen, daß er besser einen Supersparpreis verwenden sollte. Das Dienst-Objekt ist jetzt jedoch nicht mehr dazu berechtigt, diese Daten an den Dienstrechner der Deutschen Bahn zu übertragen. Nachdem das Dienst-Objekt den Schreibzugriff beantragt hat, darf es die Änderungen im Status-Objekt vornehmen und der Nutzer bekommt die Änderung mitgeteilt. Eine weitere Rückfrage ist dank des Überwachungsalgorithmus-Konzeptes ausgeschlossen.

Das zweite dieser Beispiele ist eine Anwendung mit einem Servicedienst "Einkaufen",

Eine Nutzerperson möchte eine Krawatte kaufen. Auf ihrem Dienstenutzer, z.B. einem Mobiltelephon oder einem PDA, ist diese Information außerhalb des öffenlichen Bereichs gespeichert. Ein Kaufhaus übermittelt an den Dienstenutzer ein Dienst-Objekt, das eine Angebotsliste enthält. Es ist für das Dienst-Objekt unmöglich, die Einkaufsliste zu lesen und an das Kaufhaus zu übertragen. Es beantragt den erweiterten Lesezugriff und kann mittels der Angebotsliste abgleichen, ob es dem Nutzer ein Angebot machen kann oder nicht. Zu diesem Zeitpunkt kann es mit dem Kaufhaus nicht mehr kommunizieren, sondern nur noch dem Nutzer eine Mitteilung dahingehend machen, daß das Kaufhaus ihm gerne ein Angebot machen möchte. Das Dienst-Objekt schlägt vor, die Krawattensuche öffentlich zu machen. Stimmt der Nutzer dem Vorschlag zu, so wird dieser Teil des Status-Objekts als öffentlich markiert und das Dienst-Objekt wird durch den Überwachungsalgorithmus zerstört. Hiernach kann das Kaufhaus ein weiteres Dienst-Objekt losschicken, das die nun öffentliche Krawattensuche lesen kann und dem Nutzer gezielt ein Angebot machen kann. Der Kauf wird danach wie gewohnt durchgeführt. Durch diese Vorgehensweise ist sichergestellt, daß kein Außenstehender den Dienstenutzer "ausspionieren" kann.

Zur Veranschaulichung der praktischen Durchführung des Verfahrens nach der Erfindung sind noch zwei Figuren beigefügt. Es zeigen:
- Fig.1: schematisch das Zusammenspiel zwischen einer Funkbake eines Diensteanbieters und einem Dienstenutzer in Form eines Mobiltelephons, und
- Fig.2: schematisch das Beispiel einer Anzeige auf dem Anzeigefeld des Mobiltelephons eines Nutzers.

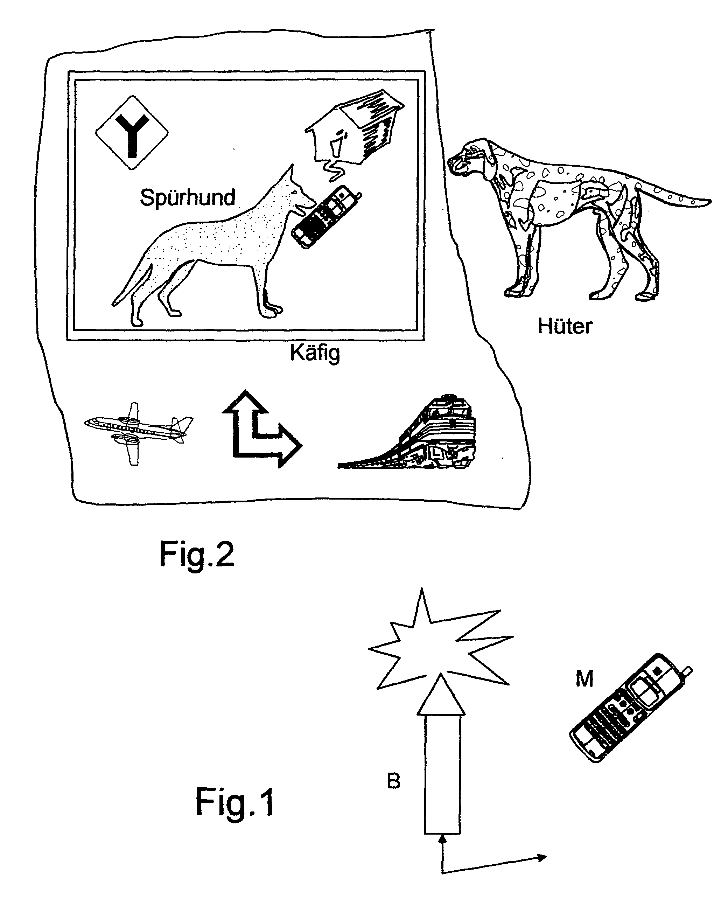

Zwischen einer Funkbake B, die einem Diensteanbieter zugeordnet ist, und einem Mobiltelephon M, das einen Dienstenutzer bildet und von einer Benutzerperson mitgeführt wird, spielt sich im Beispiel der Fig.1 eine Dienstekommunikation im Rahmen eines Reisebegleitsystems ab. Die Benutzerperson möchte z.B. von einem Ort X zu einem Ort Y reisen, wobei zunächst von einer Routenplanung ausgegangen wird, die vorschlägt, über einen Ort Z zu reisen.

Die Funkbake B bietet eine örtliche Landkarte und neueste Reiseinformationen an. Die Funkbake B und im Beispiel auch die Benutzerperson befindet sich irgendwo zwischen dem Ort X und dem Ort Y. Das dienstenutzende Mobiltelephon M nähert sich der Funkbake B und fragt "Hilf mir!".

Die Funkbake B des Diensteanbieters sendet in Form von Algorithmen ein Dienst-Objekt, das im Beispiel als Spürhund bezeichnet ist, an das Mobiltelephon M der Benutzerperson. Das Mobiltelephon M berechtigt daraufhin die Funkbake B. Der Spürhund detektiert den Wunsch der Benutzerperson, vom Ort X zum Ort Y zu reisen und zwar aufgrund Lesens eines Teils innerhalb des Status-Objekts, das sowohl Nutzerdaten als auch Historiendaten und Wünsche (Optionen) des Nutzers in einem Speicher des Mobiltelephons M enthält. Der Spürhund kennt den Ort der Funkbake B.

Der Spürhund kommuniziert mit der Funkbake B und diese ermittelt beispielsweise, daß die beste einzuschlagende Route eine neue Eisenbahnstrecke direkt zum Ort Y ist. Die Funkbake B kommuniziert mit dem Spürhund und übermittelt an das Mobiltelephon M eine Landkarte und Anweisungen, wie die neue Eisenbahn erreicht werden kann. Der Spürhund modifiziert das Status-Objekt. Das Reisebegleitsystem faßt auf dem Mobiltelephon M die Reiseleitung unter Verwendung des neuen Status-Objekts zusammen.

Der Lese-/Schreibzugriff des Spürhunds beim Status-Objekt wird im Mobiltelephon M durch einen Überwachungsalgorithmus kontrolliert, der im Beispiel von Fig.2 durch einen Hüter in Form eines Hüterhundes symbolisiert ist. Dort ist im gezeigten, verschiedenartige Symbole darstellenden Anzeigefeld des Mobiltelephons M ein Käfig um eine Fläche innerhalb des Status-Objekts durch Markierung definiert. Innerhalb dieses markierten Käfigs nur hat der Spürhund Lesezugriff. Wenn der Spürhund diese markierte Käfigfläche zu verlassen wünscht, wird es nicht mehr zugelassen, mit der Außenwelt zu kommunizieren. Lediglich lokal am Mobiltelephon M können noch Aktionen ausgeführt werden. Der Schreibzugriff wird nach Berechtigungsüberprüfung des Diensteanbieters ebenfalls kontrolliert und kann hierarchisch geordnet sein.

Die Instanzen Dienst-Objekt, in Fig.2 symbolisiert durch den Spürhund im Käfig, und Sicherheitsobjekt, gebildet durch einen Überwachungsalgorithmus und in Fig.2 symbolisiert durch den Hüter in Gestalt des Hüterhundes, werden in Dienstesystemen, z.B. bei einem Reisebegleitsystem, beim Verfahren nach der Erfindung zur Sicherheitsüberwachung verwendet. Hierbei kann das Dienst-Objekt mit einer Außenstelle in Verbindung stehen und mit dieser kommunizieren. Die Schreib-/Leserechte des Dienst-Objekts (Spürhund) sind dabei situationsabhängig an die Kommunikationsfähigkeit des Dienst-Objekts gekoppelt. Durch diesen flexiblen, situationsangepaßten Schreib-/Lesezugriff läßt sich trotz hoher Flexibilität die Sicherheit eines Dienstesystems, im in Fig.1 und 2 dargestellten Beispiel des Reiseplanungssystems, maximieren.

## Patentansprüche

1. Verfahren zur Bereitstellung von Zweckinformationen, z.B. von Reise-, Buchungs- oder Zahlungsinformationen sowie von deren jeweiligen Vorgängen, eines Diensteanbieters an Dienstenutzer unter Verwendung einer elektronischen Datenverarbeitung, wobei der Diensteanbieter, welcher als eine Software auf einem EDV-Gerät mit Kommunikationsfähigkeit ausgeprägt ist, mittels Helferdiensten einem Dienstenutzer, welcher ebenfalls als eine Software auf einem EDV-Gerät mit Kommunikationsfähigkeit ausgeprägt ist, Algorithmen und/oder Algorithmenaufrufe und/oder Informationen als Dienst-Objekt zur Verfügung stellt, das beim Dienstenutzer ein Abrufen von Bedarfsinformationen bewirkt, welche auf einem dem betreffenden Dienstenutzer zugeordneten EDV-Gerät im Rahmen eines so genannten, sowohl Nutzerdaten als auch Historiendaten und Optionen des Nutzers enthaltenden Status-Objekts gespeichert sind und den weiteren Ablauf der Algorithmen und/oder Algorithmenaufrufe steuern, die beim Dienstenutzer einen Zugewinn an Zweckinformation und/oder das Auslösen eines oder mehrerer zur Bereitstellung von Zweckinformationen, also z.B. von Reise-, Buchungs- oder Zahlungsinformationen und von deren jeweiligen Vorgängen, notwendiger Prozesse veranlassen, **dadurch gekennzeichnet, dass** ein Bereich im Speicher des EDV-Geräts des Dienstenutzers dahingehend markiert wird, dass die das Dienst-Objekt darstellenden Algorithmen und/oder Algorithmenaufrufe und/oder Informationen des Diensteanbieters, die physikalisch im Speicher des EDV-Geräts des Dienstenutzers stehen können, dort lesenden Zugriff haben, dass die Auswahl des zu markierenden Speicherbereiches von einem Überwachungsalgorithmus festgesetzt wird, der per Funktionsaufruf erkennen kann, welche Art der Dienstleistung der Diensteanbieter anbieten möchte, und dann entscheidet, welcher Speicherbereich markiert werden soll, so dass bei jedem Lesezugriff des Diensteanbieters geprüft wird, ob der betreffende Lesezugriff berechtigt ist oder nicht, dass der schreibende Zugriff analog zum lesenden Zugriff gesetzt und geprüft wird, wobei die Bereiche des lesenden und schreibenden Zugriffs sich nicht überlappen müssen, sondern völlig unterschiedlich sein können, dass das Dienst-Objekt die Option hat, den lesenden und/oder schreibenden Zugriff zu erweitern, falls im Gegenzug auf eine Kommunikation mit der Außenwelt verzichtet wird, dass dazu das Dienst-Objekt beim Überwachungsalgorithmus die Beschneidung seiner Kommunikationsrechte beantragt, wodurch ein erweiterter Lesebereich und/oder ein modifizierter Schreibbereich erreicht wird, und dass das Betriebssystem oder eine sonstige, die Rechte verwaltende Software-Einheit die Kommunikationsrechte des Dienst-Objekts verweigert und die modifizierten Lese- und/oder Schreibe-Rechte kontrolliert, so dass das Dienst-Objekt nun innerhalb seiner neuen Rechte in der Lage ist, das Status-Objekt lesend und/oder schreibend zu bearbeiten.

2. Verfahren nach Anspruch 1, **dadurch gekennzeichnet, dass** der Überwachungsalgorithmus auf der Basis einer Voreinstellung entscheidet, welcher Speicherbereich des EDV-Geräts des Dienstenutzers markiert werden soll.

3. Verfahren nach Anspruch 1, **dadurch gekennzeichnet, dass** der Überwachungsalgorithmus aufgrund einer Kommunikation mit der dienstenutzenden Person entscheidet, welcher Speicherbereich des EDV-Geräts des Dienstenutzers markiert werden soll.

4. Verfahren nach einem der vorhergehenden Ansprüche, **dadurch gekennzeichnet, dass** die Markierung durch Setzen von Adressenflags vorgenommen wird.

5. Verfahren nach einem der Ansprüche 1 bis 3, **dadurch gekennzeichnet, dass** die Markierung durch Einträge in eine Adressentabelle vorgenommen wird.

6. Verfahren nach einem der Ansprüche 1 bis 3, **dadurch gekennzeichnet, dass** die Markierung durch Einträge in Member-Datenfelder des sogenannten Status-Objekts vorgenommen wird.

7. Verfahren nach Anspruch 1, **dadurch gekennzeichnet, dass** die Option **dadurch** eintritt, dass das Dienst-Objekt erkennt, dass noch weitere Aktionen im Status-Objekt von Nöten wären, aber der Zugriff auf Grund der fehlenden Leserechte verweigert wird.

8. Verfahren nach Anspruch 7, **dadurch gekennzeichnet, dass** die Erkennung auf Grund der logischen Prüfung einer Reihe von Kriterien vorgenommen wird.

9. Verfahren nach einem der vorhergehenden Ansprüche, **dadurch gekennzeichnet, dass** der Diensteanbieter an einem Look-Up-Verfahren teilnimmt und dort ihm zugeordnete Helferdienste einträgt.

10. Verfahren nach einem der vorhergehenden Ansprüche, **dadurch gekennzeichnet, dass** die Algorithmen und/oder Algorithmenaufrufe und/oder Informationen die Steuerung des Diensteanbieters übernehmen.

11. Verfahren nach Anspruch 10, **dadurch gekennzeichnet, dass** die Algorithmen und/oder Algorithmenaufrufe und/oder Informationen die Steuerung des Diensteanbieters durch Kommunikation mit dem Diensteanbieter übernehmen.

12. Verfahren nach einem der vorhergehenden Ansprüche, **dadurch gekennzeichnet, dass** die Informationen des Diensteanbieters den Dienstenutzern über Baken angeboten werden, mit welchen ein Dienstenutzer mit Hilfe eines mobilen Geräts drahtlos mittels Funk-, Infrarot- oder Ultraschallsignalen oder drahtgebunden kommunizieren kann.

13. Verfahren nach Anspruch 12, **dadurch gekennzeichnet, dass** die Helferdienste, die von der Bake angeboten werden, als solche Dienste beschrieben, ausgeführt und bezeichnet werden können, die einen Weg zu einem Ziel und/oder Zwischenziel beschreiben.

14. Verfahren nach einem der Ansprüche 1 bis 12, **dadurch gekennzeichnet, dass** die Helferdienste, die angeboten werden, als Dienste beschrieben, ausgeführt und bezeichnet werden können, welche Status-Informationen beim Dienstenutzer verändern und aktualisieren.

15. Verfahren nach einem der vorhergehenden Ansprüche unter Einschluß von Anspruch 12, **dadurch gekennzeichnet, dass** die von den Algorithmen veränderbaren Informationen die von einer reisenden Person zu nehmende/n Wegroute/n, Karten, Ankunftszeiten von Fahrzeugen, wie z.B. Taxi, Bus, Bahn usw., in denen sich ein mobiles Gerät befindet, die aktuelle Position der Bake oder des mobilen Geräts, Fahrpläne und Routen von Verkehrsmitteln oder Hinweise zu Veranstaltungen, Restaurants und Hotels in der Umgebung, zu Touristeninformationen, Fremdenverkehrsämtern, Tankstellen, Geschäften, Ämtern, Krankenhäusern und dergleichen sind.

16. Verfahren nach einem der vorhergehenden Ansprüche unter Einschluß von Anspruch 9, **dadurch gekennzeichnet, dass** das Look-Up-Verfahren mittels eines Betriebssystem mit standardisierter Architektur, insbesondere entsprechend der JINI™-Technologie, arbeitet, die es ermöglicht, einen Anbieter von Diensten mit Teilnehmern über ein gemeinsames Netzwerk zu koppeln.

17. Verfahren nach einem der vorhergehenden Ansprüche, **dadurch gekennzeichnet, dass** die Verteilung der Algorithmen und/oder Algorithmenaufrufe und/oder Informationen auf verschiedene Recheneinheiten, d.h. beispielsweise das EDV-Gerät des Diensteanbieters oder das EDV-Gerät des Dienstenutzers, mittels Remote Method Invocation, abgekürzt RMI, z.B. von JA-VA™, oder beispielsweise mittels JINI™ vorgenommen wird.

## Claims

1. A method for providing purpose information, e.g. travel, accounting or payment information and actions associated therewith of a services provider to services users in making use of electronic data processing (EDP), the services provider defined as software on a communicating EDP device by means of helper services to a services user, likewise defined as software on a communicating EDP device in making available algorithms and/or algorithm invocations and/or information as a status object, invoking at the services user requirement information stored on an EDP device in the scope of a so-called status object containing both user data and historic data and options of the user in controlling the further sequence of the algorithms and/or algorithm invocations prompting at the services user an extra gain in purpose information and/or activating one or more processes as necessary for providing purpose information, such as e.g. travel, accounting or payment information and their respective actions, **characterized by** marking an area in the memory of the EDP device of the services user such that the algorithms and/or algorithm invocations and/or information of the services provider representing the service object as physically available in the memory of the EDP device of the services user have reading access thereto; defining the selection of the memory area to be marked by a watchdog algorithm capable of recognizing by function invocation which kind of service the services provider wishes to offer and then deciding which memory area is to be marked so that reading access of the services provider is tested whether the respective reading access has the right or not; the writing access being set and tested analogously to the reading access, whereby the areas of reading access and writing access do not need to overlap, but may be totally different; the status object having the option to expand the reading access and/or writing access when, in kind, communication with the outside world is dispensed with; for this purpose the service object petitioning a reduction in its communication rights and by the operating system or some other software unit managing the rights denying the communication rights of the service object and controlling the modified read and/or write rights so that the service object is now able within its new rights to process the status object by reading and/or writing.

2. The method as set forth in claim 1, **characterized in that** the watchdog algorithm decides on the basis of a presetting which memory area of the EDP device of the services user is to be marked.

3. The method as set forth in claim 1, **characterized in that** the watchdog algorithm decides on the basis of a communication with the services user person which memory area of the EDP device of the services user is to be marked.

4. The method as set forth in any of the preceding claims, **characterized in that** marking is done by setting address flags,

5. The method as set forth in any of the claims 1 to 3, **characterized in that** marking is done by entries in an address table.

6. The method as set forth in any of the claims 1 to 3, **characterized in that** marking is done by entries in member data fields of the so-called status object.

7. The method as set forth in claim 1, **characterized by** the option occurring because of the service object recognizing that still further actions would be needed in the status object, but access is denied on the basis of missing reading rights.

8. The method as set forth in claim 7, **characterized in that** recognition is done on the basis of logical testing a string of criteria.

9. The method as set forth in any of the preceding claims, **characterized in that** the services provider partakes in a look-up routine and enters the helper services assigned to it therein.

10. The method as set forth in any of the preceding claims, **characterized in that** the algorithms and/or algorithm invocations and/or information handle control of the services provider.

11. The method as set forth in claim 10, **characterized in that** the algorithms and/or algorithm invocations and/or information handle control of the services provider by communication with the services provider.

12. The method as set forth in any of the preceding claims, **characterized in that** the information of the services provider is offered to services users via beacons with which a services user can communicate with the aid of a mobile device by wireless, infrared or ultrasound signals or wired.

13. The method as set forth in claim 12, **characterized in that** the helper services offered by the beacon, can be described, implemented and designated as services describing a way to a destination and/or destination en route.

14. The method as set forth in any of the claims 1 to 12, **characterized in that** the offered helper services can be described, implemented and designated as services which modify and update status information at the services user.

15. The method as set forth in any of the preceding claims, except for claim 12, **characterized in that** the information for altering by algorithms are the route(s), tickets, arrival times of vehicles (taxi, bus, rail, etc) taken by a travelling person in which a mobile device is located, the location of the beacon or mobile device at any one time, timetables and routes of public transport vehicles or indications as to events, restaurants and hotels in the vicinity, tourist information, local tourist guides, filling stations, shops, offices, hospitals and the like.

16. The method as set forth in any of the preceding claims, except for claim 9, **characterized in that** the look-up routine works by means of an operating system having a standardized architecture, particularly in accordance with the JINI™ technology for coupling services providers to subscribers via a common network.

17. The method as set forth in any of the preceding claims, **characterized in that** distributing the algorithms and/or algorithm invocations and/or information to various computing units, i.e. for example the EDP device of the services provider or the EDP device of the services user is done by means of remote method invocation (RMI). E.g. von JAVA™, or, for example, by means of JINI™.

## Revendications

1. Procédé pour la fourniture d'informations de destination, par exemple d'informations de voyage, de réservation ou de paiement ainsi que de leurs procédures associées, d'un prestataire de services à un utilisateur de services en employant un traitement de données électroniques, moyennant quoi le prestataire de services, qui se présente sous la forme d'un logiciel sur un appareil informatique ayant des capacités de communication, met à disposition d'un utilisateur de services, qui se présente également sous la forme d'un logiciel sur un appareil informatique ayant des capacités de communication, au moyen des services d'un assistant, des algorithmes et / ou des appels d'algorithme et / ou des informations sous forme d'un objet de service qui opère au niveau de l'utilisateur de services un appel des informations nécessaires qui sont enregistrées sur un appareil informatique, associé à l'utilisateur de services concerné, dans le cadre d'un ainsi nommé objet d'état contenant des données d'utilisateur ainsi que des données d'historique et des options de l'utilisateur et qui commandent le déroulement ultérieur des algorithmes et / ou des appels d'algorithme qui occasionnent, au niveau de l'utilisateur de services, un gain d'informations de destination et / ou le déclenchement d'un ou de plusieurs processus nécessaires à la fourniture des informations de destination, c'est-à-dire par exemple des informations de voyage, de réservation ou de paiement et de leurs procédures associées, **caractérisé en ce qu'**une zone dans la mémoire de l'appareil informatique de l'utilisateur de services est marquée de manière que les algorithmes et / ou les appels d'algorithme et / ou les informations du prestataire de services, qui représentent l'objet de service et qui peuvent être présentes physiquement dans la mémoire de l'appareil informatique de l'utilisateur de services, aient un accès en lecture à la mémoire, **en ce que** le choix de la zone de la mémoire à marquer est déterminé par un algorithme de surveillance qui peut détecter par appel de fonction quel type de prestation de service le prestataire de services voudrait proposer et qui ensuite décide quelle zone de la mémoire doit être marquée de sorte qu'il soit vérifié à chaque accès en lecture du prestataire de services si l'accès en lecture concerné est autorisé ou non, **en ce que** l'accès en écriture analogue à l'accès en lecture est déterminé et vérifié, les zones de l'accès en lecture et de l'accès en écriture ne devant pas se recouvrir, mais au contraire pouvant être entièrement différentes, **en ce que** l'objet de service a l'option d'étendre l'accès en lecture et / ou en écriture si, en contrepartie d'une communication avec l'extérieur, on renonce à ce que l'objet de service lors de l'algorithme de surveillance demande pour cela la limitation de ses droits de communication, moyennant quoi on parvient à une zone de lecture étendue et / ou une zone d'écriture modifiée, et **en ce que** le système d'exploitation ou une unité logicielle quelconque gérant les droits refuse les droits de communication de l'objet de service et contrôle les droits de lecture et / ou d'écriture modifiés de sorte que l'objet de service soit désormais capable au sein de ses nouveaux droits de traiter en lecture ou écriture l'objet d'état.

2. Procédé selon la revendication 1, **caractérisé en ce que** l'algorithme de surveillance décide sur la base d'une présélection quelle zone de la mémoire de l'appareil informatique de l'utilisateur de services doit être marquée.

3. Procédé selon la revendication 1, **caractérisé en ce que** l'algorithme de surveillance décide en raison d'une communication avec la personne utilisant le service quelle zone de la mémoire de l'appareil informatique de l'utilisateur de services doit être marquée.

4. Procédé selon l'une quelconque des revendications précédentes, **caractérisé en ce que** le marquage est effectué en activant un drapeau d'adresse.

5. Procédé selon l'une des revendications 1 à 3, **caractérisé en ce que** le marquage est effectué par le biais de données inscrites dans une table d'adresses.

6. Procédé selon l'une des revendications 1 à 3, **caractérisé en ce que** le marquage est effectué par le biais de données inscrites dans des champs de données de membre dudit objet d'état.

7. Procédé selon la revendication 1, **caractérisé en ce que** l'option survient **en ce que** l'objet de service détecte que d'autres actions dans l'objet d'état seraient encore nécessaires, mais l'accès est refusé en raison des droits de lecture manquants.

8. Procédé selon la revendication 7, **caractérisé en ce que** la détection est effectuée en raison de la vérification logique d'une série de critères.

9. Procédé selon l'une quelconque des revendications précédentes, **caractérisé en ce que** le prestataire de services participe à un procédé de recherche et y inscrit des services d'assistant qui lui sont associés.

10. Procédé selon l'une quelconque des revendications précédentes, **caractérisé en ce que** les algorithmes et / ou les appels d'algorithme et / ou les informations prennent en charge la commande du prestataire de services.

11. Procédé selon la revendication 10, **caractérisé en ce que** les algorithmes et / ou les appels d'algorithme et / ou les informations prennent en charge la commande du prestataire de services par le biais d'une communication avec le prestataire de services.

12. Procédé selon l'une quelconque des revendications précédentes, **caractérisé en ce que** les informations du prestataire de services sont proposées aux utilisateurs de services par des balises avec lesquelles un utilisateur de services peut communiquer à l'aide d'un appareil mobile sans fils au moyen de signaux radioélectriques, infrarouges ou ultrasonores.

13. Procédé selon la revendication 12, **caractérisé en ce que** les services d'assistant qui sont proposés par la balise, peuvent être décrits, exécutés et désignés comme des services qui décrivent un chemin vers une destination et / ou une destination intermédiaire.

14. Procédé selon l'une des revendications 1 bis 12, **caractérisé en ce que** les services d'assistant qui sont proposés peuvent être décrits, exécutés et désignés comme des services qui modifient et actualisent des informations d'état au niveau de l'utilisateur de services.

15. Procédé selon l'une quelconque des revendications précédentes y compris la revendication 12, **caractérisé en ce que** les informations modifiables par les algorithmes sont l'itinérairc ou les itinéraires à prendre par une personne en voyage, des cartes, des heures d'arrivée de véhicules, par exemple de taxis, bus, trains etc.,
dans lesquels se trouve un appareil mobile, la position actuelle de la balise ou de l'appareil mobile, des horaires et des routes de moyens de transport ou des indications relatives à des manifestations, des restaurants et des hôtels dans les environs, à des informations touristiques, des offices de tourisme, des stations-service, des magasins, des services publics, des hôpitaux et des choses de ce genre.

16. Procédé selon l'une quelconque des revendications précédentes y compris la revendication 9, **caractérisé en ce que** le procédé de recherche opère au moyen d'un système d'exploitation avec une architecture standardisée, correspondant en particulier à la technologie JINI™ qui permet de coupler un prestataire de services aux participants par le biais d'un réseau commun.

17. Procédé selon l'une quelconque des revendications précédentes, **caractérisé en ce que** la répartition des algorithmes et / ou des appels d'algorithme et / ou des informations sur différents systèmes informatiques, c'est-à-dire par exemple l'appareil informatique du prestataire de services ou l'appareil informatique de l'utilisateur de services, est effectuée au moyen de Remote Method Invocation, abrégée en RMI, par exemple de JAVA™, ou par exemple au moyen de la technologie JINI™.
